# EUROPÄISCHE PATENTANMELDUNG

(11) **EP 3 263 261 A1**
(43) Veröffentlichungstag der Anmeldung: **03.01.2018**
(21) Anmeldenummer: 17177950.7
(22) Anmeldetag: 26.06.2017
(51) Int. Cl.: B23F 5/16, F16H 49/00, B23F 17/00, B23F 23/00, B23F 21/10, B23F 5/02, B23Q 27/00

(54) **ZAHNRAD, VERFAHREN ZUM HERSTELLEN DER VERZAHNUNG EINES ZAHNRADES, SOWIE WERKZEUGZAHNRAD ZUM HERSTELLEN DER VERZAHNUNG EINES ZAHNRADES**

(30) Priorität: 27.06.2016 LU 93122
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Verfahren zum Herstellen der Verzahnung eines Zahnrades, die ein Modul aufweist, der kleiner als 0,5 mm ist oder der kleiner als 0,25 mm ist oder der kleiner als 0,15 mm ist, und die x Zähne und eine Zahnradteilung p aufweist, wobei von einem Zahnradrohling, der um eine erste Rotationsachse rotiert, Material mittels eines Werkzeugzahnrades abgetragen wird, das synchron zu dem Zahnradrohling um eine zweite Rotationsachse rotiert und das eine zur herzustellenden Verzahnung komplementäre Gegenverzahnung aufweist. Das Verfahren zeichnet sich dadurch aus, dass benachbarte Zähne der Gegenverzahnung auf dem Teilkreis jeweils um n·p (n multipliziert mit p) voneinander beabstandet sind, wobei n eine natürliche Zahl größer 1 ist und wobei x und n teilerfremd sind. Insbesondere kann vorteilhaft vorgesehen sein, dass das Abtragen mittels Wälzschälen oder Wälzschälschleifen erfolgt, wobei der Vorschub des Werkzeugs in Richtung der ersten Rotationsachse im Vergleich zu einem herkömmlichen Wälzschälprozess oder Wälzschälschleifprozess um den Faktor n reduziert ist.

## Beschreibung

Die Erfindung betrifft ein Verfahren zum Herstellen einer Verzahnung, die ein Modul aufweist, der kleiner als 0,5 mm ist oder das kleiner als 0,25 mm ist oder das kleiner als 0,15 mm ist, und die x Zähne und eine Zahnradteilung p aufweist, eines Zahnrades wobei von einem Zahnradrohling, der um eine erste Rotationsachse rotiert, Material mittels eines Werkzeugzahnrades abgetragen wird, das synchron zu dem Zahnradrohling um eine zweite Rotationsachse rotiert und das eine zur herzustellenden Verzahnung komplementäre Gegenverzahnung aufweist.

Die Erfindung betrifft außerdem ein Zahnrad, das mit einem solchen Verfahren oder mit einem solchen Werkzeug hergestellt ist.

Die Erfindung betrifft darüber hinaus ein Spannungswellengetriebe mit einem solchen Zahnrad, sowie ein Fahrzeug mit einem solchen Spannungswellengetriebe und einen Roboter mit einem solchen Spannungswellengetriebe.

Ein Spannungswellengetriebe besitzt zumeist ein starres, kreisförmiges innenverzahntes Zahnrad (Circularspline) und ein flexibles außenverzahntes Zahnrad (Flexspline), das im Inneren des starren innenverzahnten Zahnrads angeordnet ist. In dem außenverzahnten Zahnrad ist ein elliptischer Wellengenerator mittels eines Wälzlagers drehbar angeordnet, der das flexible außenverzahnte Zahnrad zu einer zumeist elliptischen Form verformt, um die Verzahnungen des innenverzahnten Zahnrades und des flexiblen außenverzahnten Zahnrades an jedem Ende der Ellipsen-Hauptachse miteinander in Eingriff zu bringen. Wenn der Wellengenerator gedreht wird, gelangen die Zähne des flexiblen außenverzahnten Zahnrades an gegenüberliegenden Seiten umlaufend in und außer Eingriff mit den Zähnen des starren innenverzahnten Zahnrades, wobei sich die Zähne des außenverzahnten Zahnrades fortlaufend radial um wenigstens ihre Zahnhöhe bewegen.

Insbesondere Spannungswellengetriebe werden zumeist einstufig mit hohem Untersetzungsverhältnis ausgebildet, wobei sich das Untersetzungsverhältnis i für einen Antrieb über den Wellengenerator und einen Abtrieb über den Circularspline bauartbedingt nach der Gleichung: i = z_{H} / (z_{I} - z_{H}) errechnet, wobei z_{I} die Anzahl der Zähne des innenverzahntes Zahnrades und z_{H} die Anzahl der Zähne des außenverzahnten Zahnrades ist. Dies bedeutet, dass das Untersetzungsverhältnis eine Funktion der Zähnezahlen ist und dass ein umso größeres Untersetzungsverhältnis erzielbar ist, je mehr Zähne auf den Teilkreisen des außenverzahnten Zahnrades und des innenverzahnten Zahnrades angeordnet werden können.

Durch den Zusammenhang Teilkreislänge = Zähnezahl · Zahnradteilung bzw. Teilkreisdurchmesser = Zähnezahl · Modul, müssen zum Erzielen eines höheren Untersetzungsverhältnisses Verzahnungen mit kleinerer Zahnradteilung hergestellt werden, wenn der Teilkreisdurchmesser unverändert bleiben soll. Allerdings ist das Herstellen von Zahnrädern, insbesondere von Zahnrädern für Spannungswellengetriebe, deren Verzahnung eine kleine Zahnradteilung aufweist, technisch sehr aufwändig.

Es gibt eine Vielzahl von Verfahren, um Zahnräder, insbesondere innen- oder außenverzahnte Zahnräder, herzustellen.

Beispielsweise ist das Herstellungsverfahren des Wälzschälens aus DE 243 514, DE 10 2008 037 514 A, DE 10 2005 049 528 A1 oder DE 10 2007 015 357 A1 bekannt. Das Wälzschälen ist eines von verschiedenen bekannten Verfahren zum Herstellen von Zahnrädern. Beim Wälzschälen wird die an einem Werkstück herzustellende Verzahnung mit einem Werkzeug-Zahnrad erzeugt, das Schneidkanten und eine zur herzustellenden Verzahnung komplementäre Verzahnung aufweist.

Hierzu werden das Werkstück und das Zahnrad an zueinander windschiefen Rotationsaxen positioniert und, insbesondere mit gleichsinniger Drehrichtung, synchron zueinander in Drehung versetzt. Die Schneidkanten des Werkzeug-Zahnrades führen hierbei aufgrund der windschiefen Stellung von Werkstück und Zahnrad in dem Werkstück eine Bewegung aus, die der Bewegung einer Baggerschaufel gleicht, wodurch die Verzahnung spanend hergestellt wird. Das rotierende Werkzeug-Zahnrad wird in einer bezogen auf das rotierende Werkstück axialen Vorschubrichtung relativ zu dem Werkstück bewegt, um die Verzahnung mittels der oben beschrieben Schneidbewegungen über die gewünschte Breite herzustellen. Allerdings ist es hierbei bereits äußerst problematisch, kleinmodulige Werkzeug-Zahnräder herzustellen. Die Herstellbarkeit kleinmoduliger Werkzeuge ist bisher fertigungstechnisch begrenzt.

Insbesondere sind Verfahren bekannt, um Zahnräder mit einer großmoduligen Verzahnung herzustellen.

Beispielsweise ist aus EP 2 839 914 A2 eine Zahnradbearbeitungsvorrichtung bekannt, bei der ein Bearbeitungswerkzeug und ein Werkstück mit einer hohen Geschwindigkeit synchron zueinander drehen, um ein hochgenaues Zahnrad durch Schneiden zu bearbeiten. Das Bearbeitungswerkzeug ist so hergestellt, dass jeder der Teilungen zwischen den Werkzeugschaufeln des Bearbeitungswerkzeugs ein ganzzahliges Vielfaches eines Abstandes zwischen den Zähnen des herzustellenden Zahnrades ist, wobei das ganzzahlige Vielfache gleich oder größer als das Doppelte ist. Es gibt jedoch Zahnräder, insbesondere innenverzahnte Zahnräder mit bestimmten Zähnezahlen, die sich mit der in dieser Druckschrift beschriebenen Herstellungsweise nicht herstellen lassen. Ähnliches offenbart WO 2014/176169 A2.

Aus EP 2 745 970 A1 ist eine Vorrichtung zum Verzahnen von Werkrädern durch Wälzschälen bekannt. Die Vorrichtung weist eine drehantreibbare Werkstückspindel zur Aufnahme des insbesondere innen zu verzahnenden Werkrades und eine drehantreibbare Werkzeugspindel, die ein Schneidzähne aufweisendes Schälrad trägt, auf. Der Abstand zumindest einiger gleichgestalteter Zähne des Schölrades entspricht einem Mehrfachen der regulären Zahnteilung eines regulären Schölrades, wobei das Schälrad eine ungerade Anzahl von Zähnen aufweist, wenn die Anzahl der Zähne des zu verzahnenden Werkstücks gerade ist und umgekehrt.

Es ist daher die Aufgabe der vorliegenden Erfindung, ein Verfahren anzugeben, mit dem auf einfache Weise Zahnräder, insbesondere Zahnräder für ein Spannungswellengetriebe, mit kleiner Zahnradteilung hergestellt werden können.

Die Aufgabe wird durch ein Verfahren der eingangs genannten Art gelöst, das dadurch gekennzeichnet ist, dass benachbarte Zähne der Gegenverzahnung auf dem Teilkreis jeweils um n·p (n multipliziert mit p) voneinander beabstandet sind, wobei n eine natürliche Zahl größer 1 ist und wobei x und n teilerfremd sind.

Hierbei gibt x Gesamtanzahl der Zähne der Verzahnung des herzustellenden Zahnrades an.

Es ist eine weitere Aufgabe der vorliegenden Erfindung, ein Werkzeugzahnrad für das Herstellen von Zahnrädern, insbesondere von Zahnrädern für ein Spannungswellengetriebe, mit kleiner Zahnradteilung anzugeben.

Die weitere Aufgabe wird durch ein Werkzeugzahnrad gelöst, das dadurch gekennzeichnet ist, dass das Werkzeugzahnrad eine zur herzustellenden Verzahnung, die ein Modul aufweist, das kleiner als 0,5 mm ist oder das kleiner als 0,25 mm ist oder das kleiner als 0,15 mm ist und die x Zähne und eine Zahnradteilung p aufweist, komplementäre Gegenverzahnung aufweist, wobei benachbarte Zähne der Gegenverzahnung auf dem Teilkreis jeweils um n·p (n multipliziert mit p) voneinander beabstandet sind, wobei n eine natürliche Zahl größer 1 ist und wobei x und n teilerfremd sind.

Es ist eine weitere Aufgabe der vorliegenden Erfindung, ein Spannungswellengetriebe anzugeben, das bei kleiner Baugröße ein hohes Untersetzungsverhältnis aufweisen kann und das dennoch relativ einfach herstellbar ist.

Diese Aufgabe wird durch ein Spannungswellengetriebe gelöst, das wenigstens ein mit dem erfindungsgemäßen Verfahren und/oder mit dem erfindungsgemäßen Werkzeug hergestelltes Zahnrad beinhaltet.

In erfindungsgemäßer Weise wurde erkannt, dass bei einem Profilieren der Verzahnung mittels Schleifscheiben automatisch Grenzen gesetzt sind, weil die erforderlichen Schleifscheiben eine Mindestabmessung benötigen, um selbst ausreichend stabil zu sein, was mit der Anforderung eines kleinen Moduls kollidiert. Die Erfindung hat den besonderen Vorteil, dass die erforderlichen Werkzeugzahnräder einfach durch Verwendung rotierender Schleifscheiben hergestellt werden können, weil die Schleifscheiben - auch bei einer sehr kleinmoduligen Gegenverzahnung des Werkzeugzahnrades - selbst eine ausreichende Dicke aufweisen kann, um in sich stabil zu sein. Es müssen daher keine aufwändigen Verfahren, wie beispielsweise Erodierverfahren und weitere Bearbeitungsverfahren eingesetzt werden, um kleinmodulige Werkzeug-Zahnräder in der erforderlichen Qualität zu fertigen, was jedoch für die Umsetzung der Erfindung, insbesondere zur Ausführung des erfindungsgemäßen Verfahrens, nicht ausgeschlossen, sondern durchaus alternativ möglich ist.

Das Herstellen der Gegenverzahnung des Werkzeugzahnrades durch Profilieren mittels einer rotierenden Schleifscheibe kann insbesondere in der Weise erfolgen, dass mittels der rotierenden Schleifscheibe nacheinander die Freiräume zwischen den benachbarten und auf dem Teilkreis jeweils um n·p (n multipliziert mit p) voneinander beabstandeten Zähnen des Werkzeugzahnrades durch schleifendes Abtragen erzeugt werden. Hierbei ist die Rotationsachse der Schleifscheibe vorzugsweise tangential zum herzustellenden Werkzeugzahnrad ausgerichtet und/oder in einer zur Symmetrieachse des herzustellenden Werkzeugzahnrades senkrechten Ebene angeordnet.

Bei dem erfindungsgemäßen Verfahren werden bei einer vollständigen Umdrehung des Zahnradrohlings - anders, als bei dem bekannten Wälzschälverfahren - nicht sämtliche Zahnlücken der herzustellenden Verzahnung bearbeitet. Vielmehr werden zunächst bei der ersten Umdrehung erste Zahnlücken der Verzahnung wenigstens teilweise hergestellt und/oder bearbeitet, die entlang dem Teilkreis um mehr als eine Zahnradteilung p voneinander beabstandet sind. Dies wird dadurch erreicht, dass benachbarte Zähne der Gegenverzahnung auf dem Teilkreis jeweils um n·p (n multipliziert mit p) voneinander beabstandet sind, wobei n eine natürliche Zahl größer 1 ist. Ganz allgemein kann vorteilhaft vorgesehen sein, dass die radialen Mittellinien benachbarter erster Zahnlücken der herzustellenden Verzahnung auf dem Teilkreis jeweils um n·p voneinander beabstandet sind.

Hierbei ist es nicht erforderlich, dass die ersten Zahnlücken bereits bei der ersten Umdrehung des Zahnradrohlings vollständig hergestellt werden. Vielmehr kann vorteilhaft vorgesehen sein, dass bei weiteren n-1 Umdrehungen zunächst andere Zahnlücken der Verzahnung bearbeitet werden und dann bei der n-ten Umdrehung die Bearbeitung der ersten Zahnlücken fortgesetzt wird, und so fort.

Die Rotation des Zahnradrohlings und die dazu synchrone Rotation des Werkzeugzahnrades werden hierbei vorzugsweise nicht unterbrochen. Durch die Bedingung, dass die Zähneanzahl x der herzustellenden Verzahnung und n teilerfremd sind, wird nämlich vorteilhaft erreicht, dass jeweils nach n Umdrehungen des Zahnradrohlings sämtliche herauszuarbeitende Zahnlücken von den Zähnen des Werkzeugzahnrades erreicht wurden. Dies insbesondere, ohne die Rotation des Zahnradrohlings und des Werkzeugzahnrades anzuhalten und die Relativdrehstellung des Zahnradrohlings zu dem Werkzeugzahnrad bei angehaltener Rotation zu verändern.

Da sämtliche Zahnlücken der Verzahnung vorzugsweise in einem einzigen kontinuierlichen Prozess ohne Umspannen von Werkzeug und/oder Zahnradrohling hergestellt werden, weisen alle direkt benachbarten Zahnlücken und alle direkt benachbarten Zähne im Ergebnis entlang des Teilkreises identisch denselben Abstand zueinander auf.

Das erfindungsgemäße Verfahren ermöglicht es, das Werkzeugzahnrad einfacher auszubilden, so dass es insbesondere weniger aufwendig hergestellt werden kann. Dies deshalb, weil die Gegenverzahnung des Werkzeugzahnrades deutlich weiter voneinander beabstandete Zähne aufweist, als ein üblicher Weise, beispielsweise beim Wälzschälen, verwendetes Werkzeugzahnrad.

Beispielsweise wird beim konventionellen Wälzschälen üblicher Weise ein Werkzeugzahnrad verwendet, bei dem benachbarte Zähne entlang dem Teilkreis denselben Abstand zueinander aufweisen, wie die Zähne der herzustellenden Verzahnung. Hingegen weist das erfindungsgemäße Werkzeugzahnrad, eine zur herzustellenden Verzahnung komplementäre Gegenverzahnung auf, deren Zähne einen entlang dem Teilkreis n-fach größeren Abstand zueinander aufweisen. Beispielsweise kann vorteilhaft vorgesehen sein, dass das Werkzeugzahnrad im Vergleich zu einem konventionell üblichen Werkzeugzahnrad lediglich den ersten, vierten, siebten usw. Zahn aufweist, was dem Fall n= 3 entspricht, und die Zähne, die bei einem konventionell üblichen Werkzeugzahnrad dazwischen liegen würden, weggelassen sind. Auf diese Weise ist es vorteilhaft ermöglicht, das erfindungsgemäße Werkzeugzahnrad - auch bei sehr kleiner Zahnradteilung p - mit konventioneller Schleiftechnik herstellen zu können, weil der Zwischenraum zwischen den Zähnen des erfindungsgemäßen Werkzeugzahnrades auch mit relativ dicken Schleifscheiben erreicht werden kann.

Im Sinne der vorliegenden Anmeldung sind x und n teilerfremd, wenn es keine natürliche Zahl außer Eins gibt, die sowohl x, als auch n teilt.

Um die Verzahnung mit möglichst wenigen Umdrehungen herstellen zu können, wird bei einer vorteilhaften Ausführung des erfindungsgemäßen Verfahrens für n die kleinste Zahl aus der Menge aller mit x teilerfremden Zahlen gewählt. Insbesondere kann vorteilhaft vorgesehen sein, dass für n eine natürliche Zahl kleiner 8, insbesondere eine natürliche Zahl kleiner 6, gewählt wird, die zu x teilerfremd ist. Insbesondere kann vorteilhaft vorgesehen sein, dass für n = 2, 3, 4, 5 oder 7 gewählt wird.

Wie bereits erwähnt, kann die Erfindung beispielsweise in der Weise realisiert werden, dass das herzustellende Zahnrad durch Wälzschälen - jedoch mit einem erfindungsgemäßen Werkzeugzahnrad - hergestellt wird. Insbesondere kann vorteilhaft vorgesehen sein, dass die Verzahnung durch Wälzschälen hergestellt wird, wobei jeder Zahn der Gegenverzahnung eine Schneidkante aufweist, um Material von dem Zahnrahrohling abzuschälen.

Allerdings ist die vorliegende Erfindung auch mit anderen spanenden Herstellungsverfahren umsetzbar. Alternativ zu einem Wälzschälen ist es beispielsweise auch möglich, die Verzahnung des Zahnrades durch Wälzschälschleifen herzustellen, wobei unter Wälzschälschleifen ein schleifendes Verfahren verstanden wird, bei dem bei ähnlicher Kinematik und bei ähnlicher Anordnung von Zahnradrohling und Werkzeugzahnrad wie beim Wälzschälen eine schleifende Bearbeitung mit einem Werkzeugzahnrad erfolgt, dessen Zähne anstelle von Schneidkanten eine abrasive Oberfläche aufweisen, um Material von dem Zahnrahrohling abzuschleifen.

Es ist in vorteilhafter Weise auch möglich, die Verzahnung zunächst durch Wälzschälen in der oben beschriebenen Weise in einem Rohzustand, insbesondere mit einem Aufmaß, zu erzeugen und anschließend durch Wälzschälschleifen, beispielsweise unter Verwendung eines weiteren, erfindungsgemäßen Werkzeugzahnrades, das speziell zum Wälzschälschleifen ausgebildet ist, nachzubearbeiten. Von ganz besonderem Vorteil ist eine Ausführung, bei der die Verzahnung zunächst durch Wälzschälen erzeugt wird und bei der die Verzahnung nach einem Härteprozess durch Wälzschälschleifen nachbearbeitet wird. Diese Ausführung ist besonders vorteilhaft, weil die beim Härten durch Verziehen des Materials auftretenden Maßabweichungen durch das nachfolgende Wälzschälschleifen korrigiert werden können. Insbesondere kann vorteilhaft vorgesehen sein, dass die Verzahnung unter Verwendung des Werkzeugzahnrades durch Wälzschälen zunächst erzeugt wird und anschließend unter Verwendung eines weiteren Werkzeugzahnrades durch Wälzschälschleifen nachbearbeitet wird, wobei Material mittels des weiteren Werkzeugzahnrades abgeschliffen wird, das synchron zu dem Zahnradrohling um eine zweite Rotationsachse rotiert und das eine zur herzustellenden Verzahnung komplementäre Gegenverzahnung aufweist, wobei benachbarte Zähne der Gegenverzahnung auf dem Teilkreis jeweils um n·p (n multipliziert mit p) voneinander beabstandet sind und wobei n eine natürliche Zahl größer 1 ist und wobei x und n teilerfremd sind.

Vorzugsweise sind die erste Rotationsachse und die zweite Rotationsachse zueinander windschief angeordnet.

Bei einer besonderen Ausführung ist zur Realisierung der erforderlichen Synchronität der Rotation von Zahnradrohling und Werkzeugzahnrad vorgesehen, dass das Verhältnis der Drehzahlen von Zahnradrohling und Werkzeugzahnrad dem Verhältnis der Teilkreisdurchmesser von Werkzeugzahnrad und Zahnradrohling entspricht, so dass gilt Uz/Uw = Dw/Dz, wobei Uz die Drehzahl des Zahnradrohlings, Uw die Drehzahl des Werkzeugzahnrades, Dw der Teilkreisdurchmesser des Werkzeugzahnrades und Dz der Teilkreisdurchmesser des Zahnradrohlings ist.

Insbesondere zur Herstellung eines innenverzahnten Zahnrades ist es besonders vorteilhaft, wenn der Außendurchmesser des Werkzeugzahnrades kleiner ist, als der Innendurchmesser des Zahnradrohlings und/oder wenn der Teilkreisdurchmesser des Werkzeugzahnrades kleiner ist, als der Teilkreisdurchmesser des Zahnradrohlings.

Insbesondere wird das Verfahren vorzugsweise so ausgeführt, dass der jeweils bereits hergestellte Teil der Verzahnung und die Gegenverzahnung während der Rotation des Zahnradrohlings und Werkzeugzahnrades miteinander kämmen.

Unter der Zahnradteilung wird die Länge des Bogens auf dem Teilkreis zwischen zwei benachbarten gleichnamigen Zahnflanken (Rechts- oder Linksflanken) verstanden.

Wie bereits angesprochen kann vorteilhaft vorgesehen sein, dass bei einer ersten Umdrehung des Zahnradrohlings erste Zahnlücken der Verzahnung wenigstens teilweise hergestellt und/oder bearbeitet werden und dass bei einer unmittelbar nachfolgenden, zweiten Umdrehung des Zahnradrohlings zwischen den ersten Zahnlücken zweite Zahnlücken der Verzahnung hergestellt und/oder bearbeitet werden. Alternativ oder zusätzlich ist es auch möglich, dass bei jeder von n aufeinanderfolgenden Umdrehungen des Zahnradrohlings jeweils eine andere Gruppe von Zahnlücken der Verzahnung wenigstens teilweise hergestellt und/oder bearbeitet werden.

Das erfindungsgemäße Verfahren wird vorteilhaft so ausgeführt, dass bei jeder von n aufeinanderfolgenden Umdrehungen des Zahnradrohlings jeweils eine andere Gruppe von, insbesondere 1+(x/n - x mod n), Zahnlücken der Verzahnung wenigstens teilweise hergestellt und/oder bearbeitet werden, wobei die Rotation des Zahnradrohlings und des Werkzeugzahnrads beim Übergang von einer Gruppe zur nächsten Gruppe nicht unterbrochen wird, und/oder derart, dass nach n Umdrehungen des Zahnradrohlings sämtliche Zahnlücken der Verzahnung wenigstens teilweise hergestellt und/oder bearbeitet sind. Dann wird - vorzugsweise ohne ein Anhalten der Bearbeitung - automatisch wieder die erste Gruppe weiter hergestellt und so fort, bis die gesamte Verzahnung vollständig hergestellt ist.

Beispielsweise beim Wälzschälen oder beim Wälzschälschleifen kann der Vorschub des Werkzeugs in Richtung der ersten Rotationsachse im Vergleich zu dem herkömmlichen Wälzschälprozess oder Wälzschälschleifprozess vorteilhaft, insbesondere um den Faktor n, reduziert sein. Auf Weise wird erreicht, dass bei jedem einzelnen Schäl- oder Schleifvorgang genauso viel Material abgenommen wird, wie bei den einzelnen Schäl- oder Schleifvorgängen beim herkömmlichen Wälzschälprozess oder Wälzschälschleifprozess.

Vorzugsweise wird das erfindungsgemäße Verfahren vorteilhaft so ausgeführt, dass die gesamte Verzahnung hergestellt wird, ohne die Rotation des Zahnradrohlings und/oder die Rotation des Werkzeugzahnrads zu unterbrechen.

Vorzugsweise ist jeweils der Raum zwischen benachbarten Zähnen des Werkzeugzahnrades ein Freiraum. Dieser Freiraum kann vorteilhaft insbesondere in konventioneller Schleiftechnik hergestellt und bearbeitet werden. Obwohl das Werkzeugzahnrad, wie oben ausführlich beschrieben, dazu ausgebildet sein kann, sehr kleinmodulige Verzahnungen herzustellen, kann es selber auf diese Weise unaufwändig und vergleichsweise kostengünstig hergestellt werden. Dies insbesondere mit Schleifscheiben, deren axiale Abmessung deutlich größer ist, als die Zahnbreite der herzustellenden Verzahnung.

Vorzugsweise weisen die Zähne der Gegenverzahnung des Werkzeugs, insbesondere abgesehen von etwaig vorhandenen Schneidkanten und/oder insbesondere wenigstens in einer zur Axialrichtung senkrechten Querschnittsebene, dieselbe Form und/oder dieselbe Größe auf, wie die Zähne der herzustellenden Verzahnung.

In vorteilhafter Weise kann vorgesehen sein, dass die Gegenverzahnung, zumindest abschnittweise, insbesondere vollständig, eine Evolventenverzahnung ist und/der zur Herstellung einer zumindest abschnittweisen, insbesondere vollständigen, Evolventenverzahnung ausgebildet ist.

Von ganz besonderem Vorteil ist ein Zahnrad, das nach dem erfindungsgemäßen Verfahren und/oder unter Verwendung eines erfindungsgemäßen Werkzeugszahnrades hergestellt ist. Die Erfindung ermöglicht es in vorteilhafter Weise, ein solches Zahnrad bei vergleichsweise niedrigem Aufwand, insbesondere kostengünstig, und bei hoher Qualität und Maßgenauigkeit herzustellen.

Das mit dem erfindungsgemäßen Verfahren und/oder unter Verwendung eines erfindungsgemäßen Werkzeugs hergestellte Zahnrad weist ein Modul (Modul = Zahnradteilung dividiert durch π) auf, der kleiner als 0,5 mm ist oder der insbesondere sogar kleiner als 0,25 mm oder der kleiner als 0,15 mm ist.

In ganz besonders vorteilhafter Weise kann es sich bei dem Zahnrad um ein Hohlrad mit einer Innenverzahnung, beispielsweise für ein Spannungswellengetriebe, handeln.

Ganz allgemein kann das Zahnrad vorteilhaft als Circular-Spline oder als Dynamic-Spline oder als Flexspline für ein Spannungswellengetriebe ausgebildet sein. Alternativ ist es auch möglich, dass das Zahnrad als Teil eines Circular-Spline oder als Teil eines Dynamic-Spline oder als Teil eins Flexspline für ein Spannungswellengetriebe ausgebildet ist.

Bei einer ganz besonders vorteilhaften Ausführung ist - nach einem eigenständigen Erfindungsgedanken - die Verzahnung des Zahnrades bezogen auf die in Axialrichtung verlaufende Mittelachse des Zahnrades nicht achsensymmetrisch ausgebildet.

Eine solche Ausführung hat den ganz besonderen Vorteil, dass die Geräuschentwicklung eines Spannungswellengetriebes reduziert werden kann, insbesondere indem die Circularspline-Verzahnung und/oder die Flexspline-Verzahnung bezogen auf die Rotationsmittelachse des Spannungswellengetriebes nicht achsensymmetrisch ausgebildet werden. Auch bei einem solchen Spannungswellengetriebe stehen die Circularspline-Verzahnung und die Flexspline-Verzahnung an zwei bezogen auf die Rotationsmittelachse des Spannungswellengetriebes achsensymmetrisch gegenüberliegenden, umlaufenden Stellen umlaufend miteinander in Eingriff, jedoch erfolgt der Zahneingriff an den beiden Stellen auf Grund der Besonderheit, dass die Circularspline-Verzahnung und/oder die Flexspline-Verzahnung bezogen auf die Rotationsmittelachse des Spannungswellengetriebes nicht achsensymmetrisch ausgebildet sind, jeweils nicht genau gleichzeitig, sondern zeitlich nacheinander. Hierdurch sind die jeweils entstehenden Geräusche zueinander phasenversetzt. In vorteilhafter Weise erfolgt das Anregen von Schwingungen durch den Phasenversatz jeweils über einen längeren zeitlichen Verlauf, was zu einer geringeren Schwingungsamplitude und im Ergebnis zu einem leiser empfundenen Geräusch resultiert.

Insbesondere wenn die Verzahnung eines der beiden Zahnräder, Circularspline und Flexspline, bezogen auf die Rotationsmittelachse des Spannungswellengetriebes nicht achsensymmetrisch ausgebildet, während das andere der der beiden Zahnräder achsensymmetrisch ausgebildet, ist der zeitliche Phasenversetz des umlaufenden Zahneingriffs an den achsensymmetrisch gegenüberliegenden Stellen besonders groß. Jedoch auch, wenn sowohl die Flexspline-Verzahnung, als auch die Circularspline-Verzahnung bezogen auf die Rotationsmittelachse des Spannungswellengetriebes nicht achsensymmetrisch ausgebildet sind, gibt es eine Asymmetrie beim Zahneingriff und damit einen positiven Effekt im Hinblick auf die Geräuschentwicklung. Insbesondere kann vorteilhaft vorgesehen sein, dass die Verzahnung des Zahnrades eine ungerade Gesamtanzahl von Zähnen aufweist. Für ein solches Zahnrad lassen sich vorteilhaft zumeist viele mögliche Zahlen für n finden, die kleiner als 8, insbesondere kleiner als 6 sind.

Im Sinne der vorliegenden Anmeldung ist eine Figur achsensymmetrisch, wenn sie durch die senkrechte Achsenspiegelungen an ihrer Symmetrieachse auf sich selbst abgebildet wird. Insoweit ist insbesondere ein Zahnrad achsensymmetrisch, dass durch senkrechte Achsenspiegelungen an seiner axialen Mittelachse auf sich selbst abgebildet wird. Insbesondere ist eine Verzahnung achsensymmetrisch, wenn jeder Zahn durch senkrechte Achsenspiegelung an der axialen Mittelachse auf einen Zahn und jede Zahnlücke durch senkrechte Achsenspiegelung an der axialen Mittelachse auf eine Zahnlücke abgebildet wird. Beispielsweise ist eine Verzahnung nicht achsensymmetrisch, wenn jeder Zahn durch senkrechte Achsenspiegelung an der axialen Mittelachse auf eine Zahnlücke und jede Zahnlücke durch senkrechte Achsenspiegelung an der axialen Mittelachse auf einen Zahn abgebildet wird.

Ein Spannungswellengetriebe, das mit wenigstens einem Zahnrad ausgerüstet ist, welches nach dem erfindungsgemäßen Verfahren und/oder unter Verwendung des erfindungsgemäßen Werkzeugs hergestellt ist, hat neben einer vergleichsweise sehr kostengünstigen Herstellbarkeit den ganz besonderen Vorteil, dass es ein im Verhältnis zu seiner Baugröße großes Untersetzungsverhältnis aufweisen kann. Derartige Spannungswellengetriebe können vorteilhaft beispielsweise in Robotern, insbesondere in gelenkigen Verbindungen der Roboterarme, eingesetzt werden. Von besonderem Vorteil ist auch der Einsatz derartiger Spannungswellengetriebe in einem Fahrzeug, insbesondere in einem Kraftfahrzeug. Besonders vorteilhaft ist die Verwendung derartiger Spannungswellengetriebe in Stellaktuatoren eines Kraftfahrzeugs, beispielsweise in einem aktiven Fahrwerk, einer Überlagerungs- und/oder Servolenkung, einem Nockenwellenversteller, in einem Versteller zum Verstellen des Expansionshubes eines Verbrennungsmotors oder einem Bremssystem, insbesondere einer Feststellbremse.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: schematisch das Herstellen der Verzahnung eines Zahnrades im Wälzschälverfahren nach dem Stand der Technik, und
- Fig. 2: ein Ausführungsbeispiel des erfindungsgemäßen Verfahrens.

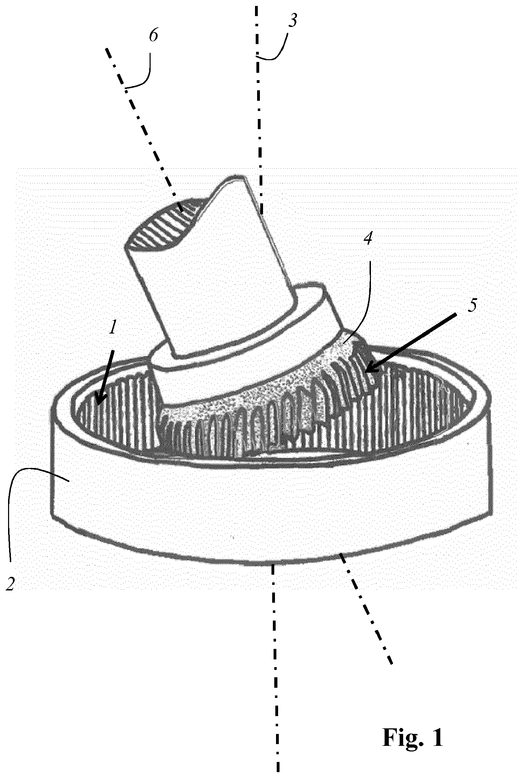

Fig. 1 illustriert schematisch das Herstellen der Verzahnung 1, die eine Gesamtanzahl von x Zähnen, beispielsweise 101 Zähnen, und eine Zahnradteilung p aufweist, eines Zahnrades 2 aus einem Zahnradrohling im Wälzschälverfahren nach dem Stand der Technik. Der Zahnradrohling, der zu Beginn keine Zähne aufweist, rotiert um eine erste Rotationsachse 3, während ein Werkzeug-Zahnrad 4, das eine zur herzustellenden Verzahnung komplementäre Gegenverzahnung 5 aufweist, synchron zur Rotation des Zahnradrohling um eine zweite Rotationsachse 6 rotiert, wobei die erste Rotationsachse 3 und die zweite Rotationsachse 6 zueinander windschief sind, und wobei sich das Werkzeugzahnrad 4 parallel zur ersten Rotationsachse 3 bewegt, während der jeweils bereits hergestellte Teil der Verzahnung 1 des rotierenden Zahnradrohlings und die Gegenverzahnung 5 des rotierenden Schleifwerkzeuges 4 der miteinander kämmen.

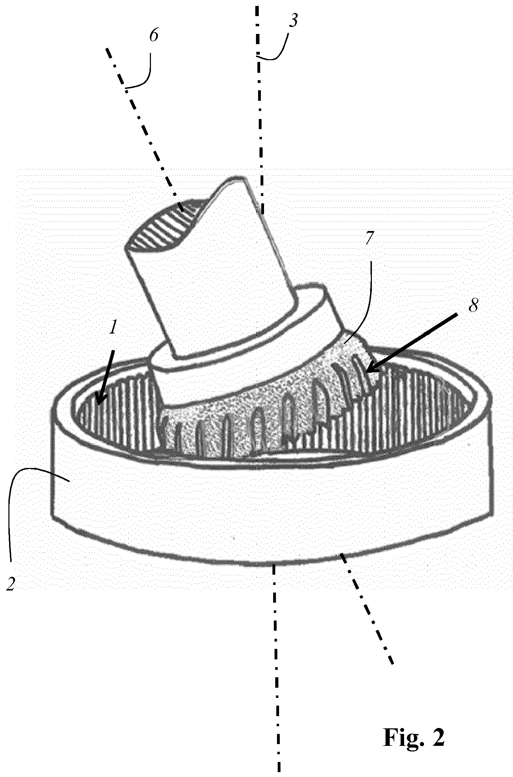

Fig. 2 illustriert ein Ausführungsbeispiel in Bezug auf das erfindungsgemäße Verfahren zum Herstellen der Verzahnung 1 eines Zahnrades 2, die ein Modul aufweist, der kleiner als 0,5 mm ist oder der kleiner als 0,25 mm ist oder der kleiner als 0,15 mm ist.

Bei diesem Ausführungsbeispiel weist die Gegenverzahnung 8 des erfindungsgemäßen Werkzeugzahnrades 7 - im Vergleich zu dem in Fig. 1 dargestellten Werkzeugzahnrad 4 nach dem Stand der Technik - nur die halbe Anzahl von Zähnen auf. Jeweils unmittelbar benachbarte Zähne der Gegenverzahnung weisen daher auf dem Teilkreis einen Abstand von n·p (n multipliziert mit p) zueinander auf, wobei in diesem Fall n gleich 2 ist. 101 und 2 sind teilerfremd. Der Raum zwischen benachbarten Zähnen des Werkzeugzahnrades 7 ist ein Freiraum.

Bei einer ersten Umdrehung des Zahnradrohlings werden zunächst erste Zahnlücken der Verzahnung 1 teilweise hergestellt, die um n·p (n multipliziert mit p), also im vorliegenden Fall um 2p voneinander beabstandet sind. Es werden also bei der ersten Umdrehung die 1., 3., 5. ... 99. und 101. Zahnlücke teilweise hergestellt. Bei der zweiten Umdrehung des Zahnradrohlings werden zweite Zahnlücken zwischen den ersten Zahnlücken teilweise hergestellt, nämlich die 2, 4., 6.... 98. und 100. Zahnlücke. Bei der dritten Umdrehung werden die ersten Zahnlücken weiter hergestellt, bei der vierten Umdrehung die zweiten Zahnlücken und so fort, bis die gesamte Verzahnung 1 vollständig hergestellt ist. Die Rotation des Zahnradrohlings und des Werkzeugzahnrades 7 wird bis zur vollständigen Herstellung der Verzahnung vorzugsweise nicht angehalten.

Im Vergleich zum dem Herstellungsverfahren nach dem Stand der Technik wird die doppelte (allgemein: n-fache) Zahl von Umdrehungen des Zahnradrohlings benötigt, um die Verzahnung 1 vollständig herzustellen. Allerdings hat das erfindungsgemäße Verfahren den ganz besonderen Vorteil, dass das Werkzeugzahnrad 7 - auch bei sehr kleiner Zahnradteilung p - einfacher, beispielsweise mit konventioneller Schleiftechnik herstellt werden kann, weil der Freiraum zwischen den Zähnen der Verzahnung 8 des erfindungsgemäßen Werkzeugzahnrades 7 auch mit relativ dicken Schleifscheiben erreicht werden kann.

### Bezugszeichenliste:

- 1: Herzustellende Verzahnung
- 2: Zahnrad
- 3: Erste Rotationsachse
- 4: Werkzeugzahnrad (Stand der Technik)
- 5: Gegenverzahnung des Werkzeugzahnrades 4
- 6: Zweite Rotationsachse
- 7: Ausführungsbeispiel eines erfindungsgemäßen Werkzeugzahnrades
- 8: Gegenverzahnung des Werkzeugzahnrades 7

## Patentansprüche

1. Verfahren zum Herstellen einer Verzahnung, die ein Modul aufweist, der kleiner als 0,5 mm ist oder der kleiner als 0,25 mm ist oder der kleiner als 0,15 mm ist, und die x Zähne und eine Zahnradteilung p aufweist, eines Zahnrades, wobei von einem Zahnradrohling, der um eine erste Rotationsachse rotiert, Material mittels eines Werkzeugzahnrades abgetragen wird, das synchron zu dem Zahnradrohling um eine zweite Rotationsachse rotiert und das eine zur herzustellenden Verzahnung komplementäre Gegenverzahnung aufweist, **dadurch gekennzeichnet, dass** benachbarte Zähne der Gegenverzahnung auf dem Teilkreis jeweils um n·p voneinander beabstandet sind, wobei n eine natürliche Zahl größer 1 ist und wobei x und n teilerfremd sind.

2. Verfahren nach Anspruch 1, **dadurch gekennzeichnet, dass** das Abtragen mittels Wälzschälen oder Wälzschälschleifen erfolgt, wobei der Vorschub des Werkzeugs in Richtung der ersten Rotationsachse im Vergleich zu einem herkömmlichen Wälzschälprozess oder Wälzschälschleifprozess um den Faktor n reduziert ist.

3. Verfahren nach Anspruch 1 oder 2, **dadurch gekennzeichnet, dass** zunächst die Gegenverzahnung des Werkzeugzahnrades durch Profilieren mittels einer rotierenden Schleifscheibe hergestellt wird und anschließend die Verzahnung unter Verwendung des so hergestellten Werkzeugzahnrades hergestellt wird.

4. Verfahren nach einem der Ansprüche 1 bis 3, **dadurch gekennzeichnet, dass**
a. die Verzahnung durch Wälzschälen hergestellt wird oder dass
b. die Verzahnung durch Wälzschälen hergestellt wird, wobei jeder Zahn der Gegenverzahnung eine Schneidkante aufweist, um Material von dem Zahnrahrohling abzuschälen, oder dass
c. die Verzahnung durch Wälzschälschleifen hergestellt wird, oder dass
d. die Verzahnung durch Wälzschälschleifen hergestellt wird, wobei jeder Zahn der Gegenverzahnung eine abrasive Oberfläche aufweist, um Material von dem Zahnrahrohling abzuschleifen oder dass
e. die Verzahnung durch Wälzschälen zunächst erzeugt wird und anschließend durch Wälzschälschleifen nachbearbeitet wird, oder dass
f. die Verzahnung durch Wälzschälen zunächst erzeugt wird und anschließend gehärtet und dann anschließend durch Wälzschälschleifen nachbearbeitet wird, oder dass
g. die Verzahnung unter Verwendung des Werkzeugzahnrades durch Wälzschälen zunächst erzeugt wird und anschließend unter Verwendung eines weiteren Werkzeugzahnrades durch Wälzschälschleifen nachbearbeitet wird, oder dass
h. die Verzahnung unter Verwendung des Werkzeugzahnrades durch Wälzschälen zunächst erzeugt wird und anschließend unter Verwendung eines weiteren Werkzeugzahnrades durch Wälzschälschleifen nachbearbeitet wird, wobei Material mittels des weiteren Werkzeugzahnrades abgeschliffen wird, das synchron zu dem Zahnradrohling um eine zweite Rotationsachse rotiert und das eine zur herzustellenden Verzahnung komplementäre Gegenverzahnung aufweist, wobei benachbarte Zähne der Gegenverzahnung auf dem Teilkreis jeweils um n·p voneinander beabstandet sind und wobei n eine natürliche Zahl größer 1 ist und wobei x und n teilerfremd sind.

5. Verfahren nach einem der Ansprüche 1 bis 4, **dadurch gekennzeichnet, dass**
a. bei einer ersten Umdrehung des Zahnradrohlings erste Zahnlücken der Verzahnung wenigstens teilweise hergestellt und/oder bearbeitet werden und dass bei einer unmittelbar nachfolgenden, zweiten Umdrehung des Zahnradrohlings zwischen den ersten Zahnlücken zweite Zahnlücken der Verzahnung hergestellt und/oder bearbeitet werden, und/oder dass
b. bei jeder von n aufeinanderfolgenden Umdrehungen des Zahnradrohlings jeweils eine andere Gruppe von Zahnlücken der Verzahnung wenigstens teilweise hergestellt und/oder bearbeitet werden, und/oder dass
c. bei jeder von n aufeinanderfolgenden Umdrehungen des Zahnradrohlings jeweils eine andere Gruppe von Zahnlücken der Verzahnung wenigstens teilweise hergestellt und/oder bearbeitet werden, wobei die Rotation des Zahnradrohlings und des Werkzeugzahnrads beim Übergang von einer Gruppe zur nächsten Gruppe nicht unterbrochen wird, und/oder dass
d. nach n Umdrehungen des Zahnradrohlings sämtliche Zahnlücken der Verzahnung wenigstens teilweise hergestellt und/oder bearbeitet sind, und/oder dass
e. die gesamte Verzahnung hergestellt wird, ohne die Rotation des Zahnradrohlings und/oder die Rotation des Werkzeugzahnrads zu unterbrechen, und/oder dass
f. die Verzahnung eine Evolventenverzahnung ist, und/oder dass
g. die Verzahnung wenigstens einen evolventischen Abschnitt aufweist, und/oder dass
h. die Verzahnung eine Innenverzahnung ist.

6. Werkzeugzahnrad zum Herstellen der Verzahnung eines Zahnrades oder zum Herstellen eines Zahnrades mit dem Verfahren nach einem der Ansprüche 1 bis 5, **dadurch gekennzeichnet, dass** das Werkzeugzahnrad eine zur herzustellenden Verzahnung, die ein Modul aufweist, der kleiner als 0,5 mm ist oder der kleiner als 0,25 mm ist oder der kleiner als 0,15 mm ist und die x Zähne und eine Zahnradteilung p aufweist, komplementäre Gegenverzahnung aufweist, wobei benachbarte Zähne der Gegenverzahnung auf dem Teilkreis jeweils um n·p voneinander beabstandet sind, wobei n eine natürliche Zahl größer 1 ist und wobei x und n teilerfremd sind.

7. Werkzeugzahnrad nach Anspruch 6, **dadurch gekennzeichnet, dass** das Werkzeugzahnrad dazu ausgebildet und bestimmt ist, synchron zu dem Zahnradrohling um eine erste Rotationsachse zu rotieren und dabei Material von einem Zahnradrohling abzutragen, wobei das Abtragen mittels Wälzschälen oder Wälzschälschleifen erfolgt und wobei der Vorschub des Werkzeugs in Richtung der ersten Rotationsachse im Vergleich zu einem herkömmlichen Wälzschälprozess oder Wälzschälschleifprozess um den Faktor n reduziert ist.

8. Werkzeugzahnrad nach Anspruch 6 oder 7, **dadurch gekennzeichnet, dass** die Verzahnung des Werkzeugzahnrades durch Profilieren mittels einer rotierenden Schleifscheibe hergestellt ist.

9. Werkzeugzahnrad nach einem der Ansprüche 6 bis 9, **dadurch gekennzeichnet, dass**
a. das Werkzeugzahnrad als Werkrad zum Wälzschälen ausgebildet ist und/oder dass die Zähne des Werkzeugs Schneidkanten aufweisen, oder dass
b. das Werkzeugzahnrad wie ein konventionelles Werkrad zum Wälzschälen ausgebildet ist, bei dem jedoch die Zähne zwischen den um n·p beabstandeten Zähnen weggelassen sind, oder dass
c. das Werkzeugzahnrad zum Wälzschälschleifen ausgebildet ist und/oder dass die Zähne des Werkzeugzahnrades eine abrasive Oberfläche aufweisen, oder dass
d. der Raum zwischen benachbarten Zähnen der Gegenverzahnung ein Freiraum ist, oder dass
e. die Zähne der Gegenverzahnung dieselbe Form und/oder dieselbe Größe aufweisen, wie die Zähne der herzustellenden Verzahnung, oder dass
f. alle Zähne der Gegenverzahnung gleich ausgebildet sind, und/oder dass
g. die Gegenverzahnung, zumindest abschnittweise, eine Evolventenverzahnung ist und/oder zur Herstellung einer zumindest abschnittweisen Evolventenverzahnung ausgebildet ist.

10. Zahnrad, dessen Verzahnung ein Modul aufweist, der kleiner als 0,5 mm ist oder der kleiner als 0,25 mm ist oder der kleiner als 0,15 mm ist und das mit einem Verfahren nach einem der Ansprüche 1 bis 5 hergestellt ist und/oder das unter Verwendung eines Werkzeugzahnrades nach einem der Ansprüche 6 bis 9 hergestellt ist.

11. Zahnrad nach Anspruch 10, **dadurch gekennzeichnet, dass** die Verzahnung eine Innenverzahnung ist.

12. Zahnrad nach Anspruch 10 oder 11, **dadurch gekennzeichnet, dass**
a. das Zahnrad als Circularspline oder als Dynamicspline oder als Flexspline für ein Spannungswellengetriebe ausgebildet ist, oder dass
b. das Zahnrad als Teil eines Circularspline oder als Teil eines Dynamicspline oder als Teil eines Flexspline für ein Spannungswellengetriebe ausgebildet ist.

13. Zahnrad nach einem der Ansprüche 10 bis 12, **dadurch gekennzeichnet, dass**
a. die Verzahnung des Zahnrades bezogen auf die in Axialrichtung verlaufende Mittelachse des Zahnrades nicht achsensymmetrisch ausgebildet ist und/oder dass
b. die Verzahnung des Zahnrades eine ungerade Gesamtanzahl von Zähnen aufweist.

14. Spannungswellengetriebe, das wenigstens ein Zahnrad nach einem der Ansprüche 10 bis 13 beinhaltet.

15. Roboter, der wenigstens ein Zahnrad nach einem der Ansprüche 10 bis 13 oder wenigstens ein Spannungswellengetriebe nach Anspruch 14 aufweist, oder Fahrzeug, insbesondere Kraftfahrzeug, das wenigstens ein Zahnrad nach einem der Ansprüche 10 bis 13 oder ein Spannungswellengetriebe nach Anspruch 13 aufweist.
